# EUROPEAN PATENT SPECIFICATION

(11) **EP 3 426 001 B1**
(45) Date of publication and mention of the grant of the patent: **14.04.2021**
(21) Application number: 17179401.9
(22) Date of filing: 03.07.2017
(51) Int. Cl.: H05B 6/12, F24C 7/06, F24C 15/10

(54) **COOKING HOB**
KOCHFELD
PLAQUE DE CUISSON

(43) Date of publication of application: 09.01.2019
(73) Proprietor: ELECTROLUX APPLIANCES AKTIEBOLAG, 105 45 Stockholm (SE)
(72) Inventor: VIROLI, Alex, 47122 Forli (IT); JEANNETEAU, Laurent, 47122 Forli (IT); MILANESI, Filippo, 47122 Forli (IT); PAOLINI, Claudio, 47100 Forli (IT)
(74) Representative: Electrolux Group Patents

(56) References cited:
- EP-A1- 0 211 484
- EP-A1- 2 144 007
- EP-A1- 3 076 754
- WO-A2-2008/080944
- CN-U- 201 887 971
- DE-A1- 10 206 062
- DE-A1-102004 062 276
- DE-A1-102007 032 757
- DE-A1-102013 218 714
- JP-A- 2005 166 568
- JP-U- S5 772 006
- JP-Y1- S 431 198
- KR-B1- 101 606 842
- US-A1- 2016 234 889
- US-A1- 2016 313 009

## Description

The present invention relates to a cooking hob with a heating element according to claim 1. In particular, the present invention relates to an induction cooking hob with a fastening system for an induction coil.

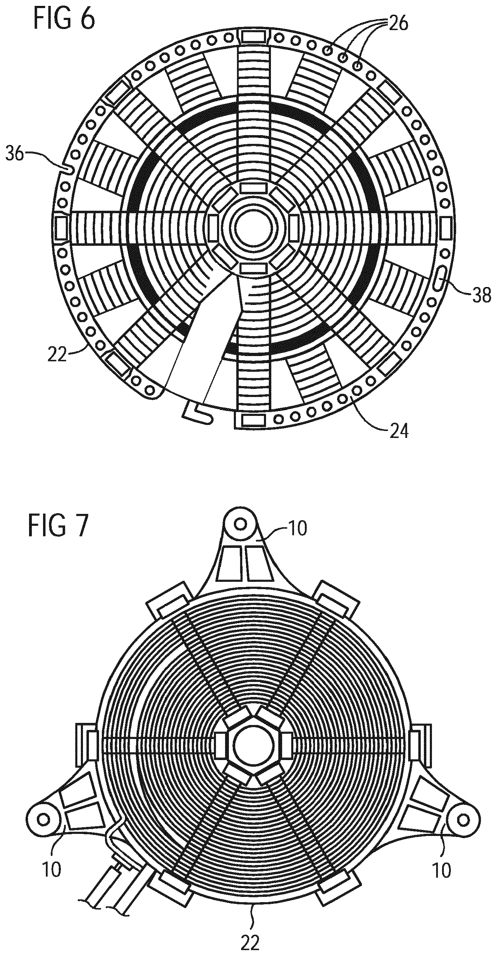

Usually, a heating element of a cooking hob has predetermined fixing points. FIG 6 illustrates a schematic top view of the heating element 22 for the cooking hob with fastening elements 10 according to the prior art. The heating element 22 may be an induction coil 22 or a radiant heating element. The heating element 22 comprises three fastening elements 10. Said fastening elements 10 are arranged at predefined positions at the heating element 22. The positions of the fastening elements 10 at the heating element 22 cannot be varied. The heating element 22 with the fastening elements 10 cannot be adapted to special geometric conditions of the cooking hob.

US 2016/313009 A1 discloses a spring clip for coupling an electric burner unit with a support structure of a glass-ceramic cooktop. The spring clip comprises a body, a retention tab, a retention arm and a snap tab. The spring clip engages with a support structure of the cooktop by engagement of the snap tab with a corresponding tab aperture in the support structure. The spring clip engages further with a housing of a burner unit by insertion of the retention tab into a hole disposed on a bottom wall of the housing and the retention arm is configured so as to be biased against a side wall of the housing when the retention tab is assembled within the hole.

From EP 0 211 484 A1 a heating unit for supporting in an opening in a hob-plate having a heating surface in the form of a glass-ceramic plate is known. The heating surface is surrounded by a bezel. A housing carries a heating element support having a peripheral wall, which housing is secured to the bezel by a plurality of circumferentially-spaced straps forming a rigid unit, with the glass-ceramic plate clamped between the bezel and the wall of the heating element support.

DE 10 2007 032 757 A1 discloses a cooking device comprising an induction unit and a fastening unit adapted to fasten the induction unit to a cooking hob panel. The fastening unit comprises fastening means configured to establish a snap-on connection. The fastening means comprise clamps, which are glued to the panel with a base plate and which have spring elements adapted to provide a spring-loaded engagement with a circumferential edge of the induction unit.

DE 10 2013 218 714 A1 discloses a cooking hob with three heating units, each one thereof being fixed to a top plate of the cooking hob by means of mounting rails attached to the bottom side of the top plate in a parallel arrangement. Each heating unit is connected to two parallel mounting rails via three or four leaf spring elements. A first end of a leaf spring element is slid-in in an eyelet-shaped recess of the heating unit and a second end comprises a mounting hook, which is hooked into a cutout of the mounting rail.

EP 3 076 754 A1 discloses an induction cooking hob with induction coils being arranged within coil trays. The coil trays are supported by a pair of plastic standoffs and associated clips. Each pair is fixed with a bottom of the standoff to a metal tray of a housing of the cooking hob. An upper side of the standoffs comprises elastic hook portions arranged at an arrowhead-shaped central pin for hooking into a related cutout of the coil tray. The clip associated with the standoff by engagement of the central pin in a bore of the clip includes two elastic shaped arms, one thereof presses against the bottom side of the coil tray in order to push it against a top plate of the cooking hob.

It is an object of the present invention to provide a cooking hob with a fastening system for a heating element, which allows a flexible arrangement of the heating element on the cooking hob.

The object is achieved by the cooking hob according to claim 1.

A cooking hob comprising at least one heating element and at least one fastening system for the heating element of the cooking hob, in particular for an induction coil of an induction cooking hob is provided, wherein the fastening system comprises at least three fastening elements connectable or connected to the cooking hob, particularly to a bottom and/or side wall of the cooking hob.

The fastening elements include a main body connectable or connected to the bottom and/or the side wall of the cooking hob.

According to the invention, at least one fastening element includes a snap-in mechanism connectable or connected to a fixation hole of the heating element, wherein the snap-in mechanism includes a fixed hook element arranged directly on the main body and a movable hook element connected to the main body via a flexible supporting arm.

The main idea of the present invention is that the fastening elements are fixable in arbitrary positions along the circumference of the heating element. Thus, the shape of heating element with the fastening elements is variable and can be adapted to the geometric conditions of the cooking hob.

Further, the moveable hook element and the fixed hook element may be connected to each other or marginally spaced from each other in an unstressed state the snap-in mechanism.

Preferably, the fixed hook element is arranged directly on a top side of the main body.

In particular, the movable hook element is connected to the top side of the main body via the flexible supporting arm.

Further, the main body of the fastening element may be formed as a pillar, wherein preferably a screw is insertable into said pillar. The screw is an alternative to the snap-in mechanism including the fixed hook element and/or the movable hook element.

Moreover, the fastening element may be formed as a single-piece part.

For example, the fastening element is made of plastics.

Furthermore, the fastening system may comprise one heating element at least partially enclosed by a border with a plurality of fixing holes, wherein said fixing hole is penetrated or penetrable by the screw and/or engageable or engaged with the snap-in mechanism of the fastening element.

In particular, the fixed hook element and/or the moveable hook element penetrate the fixing hole, when said fixing hole is engaged with the snap-in mechanism of the fastening element.

Preferably, at least one fastening element of the fastening system includes at least one electric connector connectable or connected to a complementary electric connector of the heating element.

For example, at least one fastening element of the fastening system includes at least one socket connectable or connected to a plug of the heating element.

The plug of the heating element may be connected to windings of the induction coil or a heating wire via power cables and/or to a sensor of the heating element via sensor cables.

Further, the present invention relates to a heating element for a cooking hob, in particular an induction coil of an induction cooking hob, wherein the heating element is at least partially enclosed by a border with a plurality of fixing holes, wherein each fixing hole is penetrated or penetrable by the screw and/or engageable or engaged with the snap-in mechanism of the fastening system mentioned above.

In particular, the fixing hole is penetrable by the fixed hook element and/or the moveable hook element, when said fixing hole is engaged with the snap-in mechanism of the fastening system.

Preferably, the fixing holes are arranged along a circular path in the border of the heating element.

Further, at least one of the fixing holes is formed as a poka yoke element, wherein preferably said poka yoke element is a recess opened to an outer edge of the border and/or said poka yoke element is a slot or a key hole. Preferably, two or three of the fixing holes are formed as poka yoke elements. The poka yoke elements guarantee the correct installation of the heating element at the fastening elements.

Moreover, the heating element may include at least one electric connector connectable or connected to a complementary electric connector of the fastening system.

For example, the heating element includes at least one plug connectable or connected to at least one socket of the fastening system.

The plug of the heating element may be connected to windings of the induction coil or a heating wire via power cables and/or to a sensor of the heating element via sensor cables.

At last, the present invention relates to a cooking hob comprising at least one heating element, wherein the cooking hob comprises at least one fastening system and/or at least one heating element mentioned above.

Novel and inventive features of the present invention are set forth in the appended claims.

The present invention will be described in further detail with reference to the drawings, in which
- FIG 1: illustrates a schematic sectional side view of a fastening element of a fastening system according to a preferred embodiment of the present invention,
- FIG 2: illustrates a schematic sectional side view of the fastening element with an electric connector according to the preferred embodiment of the present invention,
- FIG 3: illustrates three sectional side views of the fastening element during connecting said fastening element to a heating element according to the preferred embodiment of the present invention,
- FIG 4: illustrates a schematic sectional side view of the fastening element with the electric connector in an electric connection to the heating element to the preferred embodiment of the present invention,
- FIG 5: illustrates a schematic top view of the heating element according to the preferred embodiment of the present invention,
- FIG 6: illustrates a schematic top view of the heating element according to a further embodiment of the present invention, and
- FIG 7: illustrates a schematic top view of the heating element with fastening elements according to the prior art.

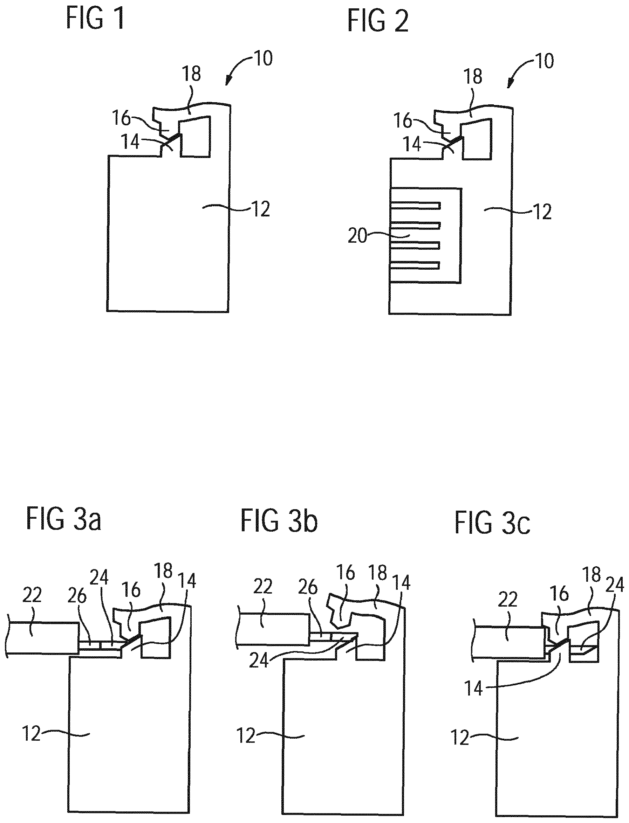

FIG 1 illustrates a schematic sectional side view of a fastening element 10 of a fastening system according to a preferred embodiment of the present invention. The fastening system is provided for fastening a heating element 22 on a cooking hob. For example, the heating element 22 is an induction coil or a radiant heating element.

The fastening element 10 comprises a pillar 12 and a snap-in mechanism. In this example, the snap-in mechanism is arranged above the pillar 12. The snap-in mechanism includes a fixed hook element 14 and a movable hook element 16. The fixed hook element 14 is arranged directly on the pillar 12, while the movable hook element 16 is connected to the pillar 12 via a flexible supporting arm 18. In an unstressed state, the movable hook element 16 is arranged upon the fixed hook element 14. In this example, the moveable hook element 16 and the fixed hook element 14 are marginally spaced from each other in said unstressed state. Preferably, the fastening element 10 is made of plastics and formed as a single-piece part.

The snap-in mechanism of the fastening element 10 is provided for receiving a border 24 of the heating element. The fastening element 10 is fixed on a bottom or at a side wall of the cooking hob. The fastening system comprises at least three fastening elements 10, wherein said fastening elements 10 are distributed around the heating element 22.

FIG 2 illustrates a schematic sectional side view of the fastening element 10 with an electric connector 20 according to the preferred embodiment of the present invention.

In this example, the electric connector is a socket 20 provided for receiving a plug 30 of the heating element 22. Alternatively, the electric connector 20 may be a plug provided for receiving a socket of the heating element 22. The socket 20 is arranged in the pillar 12 of the fastening element 10.

At least one of the fastening elements 10 of the fastening system includes the socket 20 or electric connector 20, respectively. Thus, the fastening system provides a mechanical and electric connection between the heating element 10 and the cooking hob.

FIG 3 illustrates three sectional side views of the fastening element 10 during connecting said fastening element 10 to the heating element 22 according to the preferred embodiment of the present invention.

FIG 3a shows a situation, in which the fastening element 10 and the heating element 22 are not yet connected to each other. The border 24 of the heating element 22 encloses partially or completely said heating element 22. A plurality of fixing holes 26 is formed in the border 24 of the heating element 22. One of the said fixing holes 26 is provided for receiving the fixed hook element 14 and/or the movable hook element 16 of the snap-in mechanism.

FIG 3b shows a situation, in which the border 24 of the heating element 22 is pushed into the snap-in mechanism of the fastening element 10. Thereby the border 24 pushes upwards the movable hook element 16, wherein the flexible supporting arm 18 is in a stressed state.

FIG 3c shows a situation, in which the fastening element 10 and the heating element 22 are connected to each other. The fixed hook element 14 and/or the movable hook element 16 of the snap-in mechanism penetrate one of the fixing holes 26 in the border 24 of the heating element 22. The flexible supporting arm 18 is in the unstressed state.

The connection between the fastening element 10 and the heating element 22 can be made without any tools. Further, the fastening element 10 can be disconnected from the heating element 22 by pulling upwards the movable hook element 16 and the flexible supporting arm 18, wherein no tool are required.

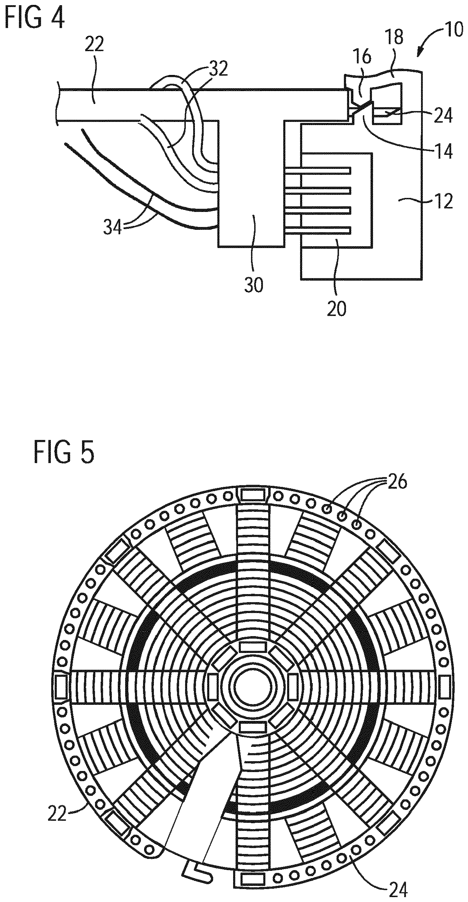

FIG 4 illustrates a schematic sectional side view of the fastening element 10 with the electric connector 20 in an electric connection to the heating element 22 according to the preferred embodiment of the present invention.

The heating element 22 includes the plug 30, at least two power cables 32 and at least two sensor cables 34. The plug 30 is connected to the socket 20 of the fastening element 10. The power cables 32 are interconnected between the plug 30 and the windings of the induction coil or heating wire. The sensor cables 34 are interconnected between the plug 30 and a sensor of the heating element 22.

FIG 5 illustrates a schematic top view of the heating element 22 according to the preferred embodiment of the present invention. In this example, the heating element 22 is an induction coil 22. Alternatively, the heating element 22 may be a radiant heating element.

The heating element 22 is enclosed by the border 24. The plurality of fixing holes 26 is formed in the border 24 of the heating element 22. In this example, the border 24 comprises seven groups of fixing holes 26, wherein in turn each group includes seven fixing holes 26. Preferably, the fixing holes 26 are arranged along a circular path. The plurality of fixing holes 26 allows a flexible the arrangement of three or more fastening elements 10 at the heating element 22. The same heating element 22 can be used in different applications. The positions of the three or more fastening elements 10 at the heating element 22 can be adapted to the geometric conditions of the cooking hob.

FIG 6 illustrates a schematic top view of the heating element 22 according to a further embodiment of the present invention. The heating element 22 of FIG 6 is similar as the heating element 22 shown in FIG 5.

Additionally, some of the fixing holes 26 are formed as poka yoke elements 36. The poka yoke elements 36 guarantee the correct installation of the heating element 22 at the fastening elements 10. One poka yoke element is formed as a recess 36 opened to an outer edge of the border 24. Other poka yoke elements form a slot 38. Further, the poka yoke element may be formed as a key hole.

Alternatively, the fixing holes 26 are penetrated by screws, wherein said screws are inserted in the pillar 12 of the fastening element 10. In this case, the fastening element 10 does not require the snap-in mechanism with the fixed hook element 14 and the movable hook element 16.

FIG 7 illustrates a schematic top view of the heating element 22 with fastening elements 10 according to the prior art. The heating element 22 may be an induction coil 22 or a radiant heating element. The heating element 22 comprises three fastening elements 10. Said fastening elements 10 are arranged at predefined positions at the heating element 22. The positions of the fastening elements 10 at the heating element 22 cannot be varied. The heating element 22 with the fastening elements 10 cannot be adapted to special geometric conditions of the cooking hob.

In contrast, the fastening system according to the present invention allows the flexible the arrangement of the three or more fastening elements 10 at the heating element 22. The same heating element 22 can be adapted to different geometric conditions of the cooking hob.

### List of reference numerals

- 10: fastening element
- 12: pillar
- 14: fixed hook element
- 16: movable hook element
- 18: flexible supporting arm
- 20: socket
- 22: heating element, induction coil
- 24: border
- 26: fixation hole
- 30: plug
- 32: power cable
- 34: sensor cable
- 36: poka yoke element, recess
- 38: poka yoke element, slot

## Claims

1. A cooking hob comprising at least one heating element (22) and at least one fastening system for the heating element (22), in particular for an induction coil (22) of an induction cooking hob, wherein the fastening system comprises at least three fastening elements (10) connectable or connected to the cooking hob,
wherein at least one fastening element (10) includes a snap-in mechanism (14, 16, 18),
**characterized in that**
the snap-in mechanism (14, 16, 18) is connectable or connected to a fixation hole (26) of the heating element (22), wherein the snap-in mechanism (14, 16, 18) includes a fixed hook element (14) arranged directly on a main body (12) of the fastening element (10) and a movable hook element (16) connected to the main body (12) of the fastening element (10) via a flexible supporting arm (18),
and wherein the fastening elements (10) include a main body (12) connectable or connected to the bottom and/or the side wall of the cooking hob.

2. The cooking hob according to claim 1,
**characterised in that**
the moveable hook element (16) and the fixed hook element (14) are connected to each other or marginally spaced from each other in an unstressed state the snap-in mechanism (14, 16, 18).

3. The cooking hob according to anyone of the preceding claims,
**characterised in that**
the fixed hook element (14) is arranged directly on a top side of the main body (12), wherein preferably the movable hook element (16) is connected to the top side of the main body (12) via the flexible supporting arm (18).

4. The cooking hob according to any one of the preceding claims,
**characterised in that**
the main body (12) of the fastening element (10) is formed as a pillar (12), wherein preferably a screw is insertable into said pillar (12).

5. The cooking hob according to any one of the preceding claims,
**characterised in that**
the fastening element (10) is formed as a single-piece part and/or the fastening element (10) is made of plastics.

6. The cooking hob according to any one of the preceding claims,
**characterised in that**
the cooking hob comprises one heating element (22) at least partially enclosed by a border (24) with a plurality of fixing holes (26), wherein said fixing hole (26) is penetrated or penetrable by the screw and/or engageable or engaged with the snap-in mechanism (14, 16, 18) of the fastening element (10), and wherein preferably the fixed hook element (14) and/or the moveable hook element (16) penetrate the fixing hole (26), when said fixing hole (26) is engaged with the snap-in mechanism (14, 16, 18) of the fastening element (10) .

7. The cooking hob according to any one of the preceding claims,
**characterised in that**
at least one fastening element (10) of the fastening system includes at least one electric connector (20) connectable or connected to a complementary electric connector (30) of the heating element (22).

8. The cooking hob according to claim 7,
**characterised in that**
at least one fastening element (10) of the fastening system includes at least one socket (20) connectable or connected to a plug (30) of the heating element (22), and wherein preferably the plug (30) of the heating element (22) is connected to windings of the induction coil or a heating wire via power cables (32) and/or to a sensor of the heating element (22) via sensor cables (34).

9. The cooking hob according to claim 6 or according to claim 7 or 8 when referring to claim 6,
**characterised in that**
the fixing hole (26) is penetrable by the fixed hook element (14) and/or the moveable hook element (16), when said fixing hole (26) is engaged with the snap-in mechanism (14, 16, 18) of the fastening system, wherein preferably the fixing holes (26) are arranged along a circular path in the border (24) of the heating element (22).

10. The cooking hob according to claim 6 or 9 or according to claim 7 or 8 when referring to claim 6,
**characterised in that**
at least one, preferably two or three, of the fixing holes (26) is formed as a poka yoke element (36, 38), wherein preferably said poka yoke element is a recess (36) opened to an outer edge of the border (24) and/or said poka yoke element is a slot (38) or a key hole.

11. The cooking hob according to any one of the claims 6, 9 or 10 or according to claim 7 or 8 when referring to claim 6,
**characterised in that**
the heating element (22) includes at least one electric connector (30) connectable or connected to a complementary electric connector (20) of the fastening system, wherein preferably the heating element (22) includes at least one plug (30) connectable or connected to at least one socket (20) of the fastening system, and wherein said plug (30) of the heating element (22) is connected to windings of the induction coil or a heating wire via power cables (32) and/or to a sensor of the heating element (22) via sensor cables (34) .

## Patentansprüche

1. Kochfeld, umfassend mindestens ein Heizelement (22) und mindestens ein Befestigungssystem für das Heizelement (22), insbesondere für eine Induktionsspule (22) eines Induktionskochfeldes, wobei das Befestigungssystem mindestens drei Befestigungselemente (10) umfasst, die mit dem Kochfeld verbindbar oder verbunden sind,
wobei mindestens ein Befestigungselement (10) einen Einrastmechanismus (14, 16, 18) enthält,
**dadurch gekennzeichnet, dass**
der Einrastmechanismus (14, 16, 18) mit einem Befestigungsloch (26) des Heizelements (22) verbindbar oder verbunden ist,
wobei der Einrastmechanismus (14, 16, 18) ein feststehendes Hakenelement (14), das direkt an einem Hauptkörper (12) des Befestigungselements (10) angeordnet ist, und ein bewegbares Hakenelement (16), das über einen flexiblen Tragarm (18) mit dem Hauptkörper (12) des Befestigungselements (10) verbunden ist, enthält, und wobei die Befestigungselemente (10) einen Hauptkörper (12) enthalten, der mit dem Boden und/oder der Seitenwand des Kochfeldes verbindbar oder verbunden ist.

2. Kochfeld gemäß Anspruch 1,
**dadurch gekennzeichnet, dass**
das bewegliche Hakenelement (16) und das feststehende Hakenelement (14) in einem unbelasteten Zustand des Einrastmechanismus (14, 16, 18) miteinander verbunden oder geringfügig voneinander beabstandet sind.

3. Kochfeld gemäß einem der vorhergehenden Ansprüche,
**dadurch gekennzeichnet, dass**
das feststehende Hakenelement (14) direkt an einer Oberseite des Hauptkörpers (12) angeordnet ist, wobei vorzugsweise das bewegbare Hakenelement (16) über den flexiblen Tragarm (18) mit der Oberseite des Hauptkörpers (12) verbunden ist.

4. Kochfeld gemäß einem der vorhergehenden Ansprüche,
**dadurch gekennzeichnet, dass**
der Hauptkörper (12) des Befestigungselements (10) als Säule (12) ausgebildet ist, wobei in die Säule (12) vorzugsweise eine Schraube einsetzbar ist.

5. Kochfeld gemäß einem der vorhergehenden Ansprüche,
**dadurch gekennzeichnet, dass**
das Befestigungselement (10) als ein einzelnes Teil ausgebildet ist und/oder das Befestigungselement (10) aus Kunststoff gefertigt ist.

6. Kochfeld gemäß einem der vorhergehenden Ansprüche,
**dadurch gekennzeichnet, dass**
das Kochfeld ein Heizelement (22) umfasst, das mindestens teilweise durch einen Rand (24) mit einer Vielzahl von Befestigungslöchern (26) umschlossen ist, wobei das Befestigungsloch (26) durch die Schraube durchdrungen oder durchdringbar ist und/oder mit dem Einrastmechanismus (14, 16, 18) des Befestigungselements (10) in Eingriff bringbar oder in Eingriff gebracht ist, und wobei vorzugsweise das feststehende Hakenelement (14) und/oder das bewegliche Hakenelement (16) das Befestigungsloch (26) durchdringt, wenn das Befestigungsloch (26) mit dem Einrastmechanismus (14, 16, 18) des Befestigungselements (10) in Eingriff gebracht ist.

7. Kochfeld gemäß einem der vorhergehenden Ansprüche,
**dadurch gekennzeichnet, dass**
mindestens ein Befestigungselement (10) des Befestigungssystems mindestens einen elektrischen Verbinder (20) enthält, der mit einem komplementären elektrischen Verbinder (30) des Heizelements (22) verbindbar oder verbunden ist.

8. Kochfeld gemäß Anspruch 7,
**dadurch gekennzeichnet, dass**
mindestens ein Befestigungselement (10) des Befestigungssystems mindestens eine Buchse (20) enthält, die mit einem Stecker (30) des Heizelements (22) verbindbar oder verbunden ist, und wobei vorzugsweise der Stecker (30) des Heizelements (22) mit Wicklungen der Induktionsspule oder einem Heizdraht über Stromkabel (32) und/oder mit einem Sensor des Heizelements (22) über Sensorkabel (34) verbunden ist.

9. Kochfeld gemäß Anspruch 6 oder gemäß Anspruch 7 oder 8 unter Bezugnahme auf Anspruch 6,
**dadurch gekennzeichnet, dass**
das Befestigungsloch (26) durch das feststehende Hakenelement (14) und/oder das bewegbare Hakenelement (16) durchdringbar ist, wenn das Befestigungsloch (26) mit dem Einrastmechanismus (14, 16, 18) des Befestigungssystems in Eingriff ist, wobei vorzugsweise die Befestigungslöcher (26) entlang eines kreisförmigen Weges in dem Rand (24) des Heizelements (22) angeordnet sind.

10. Kochfeld gemäß Anspruch 6 oder 9 oder gemäß Anspruch 7 oder 8 unter Bezugnahme auf Anspruch 6,
**dadurch gekennzeichnet, dass**
mindestens eines, vorzugsweise zwei oder drei, der Befestigungslöcher (26) als ein Poka-Yoke-Element (36, 38) ausgebildet ist, wobei vorzugsweise das Poka-Yoke-Element eine Aussparung (36) ist, die zu einer äußeren Kante des Randes (24) geöffnet ist, und/oder das Poka-Yoke-Element ein Schlitz (38) oder ein Schlüsselloch ist.

11. Kochfeld gemäß einem der Ansprüche 6, 9 oder 10 oder gemäß Anspruch 7 oder 8 unter Bezugnahme auf Anspruch 6,
**dadurch gekennzeichnet, dass**
das Heizelement (22) mindestens einen elektrischen Verbinder (30) aufweist, der mit einem komplementären elektrischen Verbinder (20) des Befestigungssystems verbindbar oder verbunden ist, wobei vorzugsweise das Heizelement (22) mindestens einen Stecker (30) enthält, der mit mindestens einer Buchse (20) des Befestigungssystems verbindbar oder verbunden ist, und wobei der Stecker (30) des Heizelements (22) mit Wicklungen der Induktionsspule oder einem Heizdraht über Stromkabel (32) und/oder mit einem Sensor des Heizelements (22) über Sensorkabel (34) verbunden ist.

## Revendications

1. Cuisinière comprenant au moins un élément chauffant (22) et au moins un système d'attache pour l'élément chauffant (22), en particulier pour une bobine d'induction (22) d'une cuisinière à induction, dans laquelle le système d'attache comprend au moins trois éléments d'attache (10) raccordables ou raccordés à la cuisinière,
dans laquelle au moins un élément d'attache (10) inclut un mécanisme à encliquetage (14, 16, 18),
**caractérisée en ce que**
le mécanisme à encliquetage (14, 16, 18) est raccordable ou raccordé à un trou de fixation (26) de l'élément chauffant (22), dans laquelle le mécanisme à encliquetage (14, 16, 18) inclut un élément à crochet fixe (14) agencé directement sur un corps principal (12) de l'élément d'attache (10) et un élément à crochet mobile (16) raccordé au corps principal (12) de l'élément d'attache (10) par l'intermédiaire d'un bras de support flexible (18),
et dans laquelle les éléments d'attache (10) incluent un corps principal (12) raccordable ou raccordé au fond et/ou à la paroi latérale de la cuisinière.

2. Cuisinière selon la revendication 1,
**caractérisée en ce que**
l'élément à crochet mobile (16) et l'élément à crochet fixe (14) sont raccordés l'un à l'autre ou marginalement espacés l'un de l'autre dans un état non contraint du mécanisme à encliquetage (14, 16, 18).

3. Cuisinière selon l'une quelconque des revendications précédentes, **caractérisée en ce que** l'élément à crochet fixe (14) est agencé directement sur un côté supérieur du corps principal (12), dans laquelle, de préférence, l'élément à crochet mobile (16) est raccordé au côté supérieur du corps principal (12) par l'intermédiaire du bras de support flexible (18).

4. Cuisinière selon l'une quelconque des revendications précédentes,
**caractérisée en ce que**
le corps principal (12) de l'élément d'attache (10) est sous forme de pilier (12), dans laquelle de préférence une vis est insérable dans ledit pilier (12) .

5. Cuisinière selon l'une quelconque des revendications précédentes,
**caractérisée en ce que**
l'élément d'attache (10) est sous forme de pièce monobloc et/ou l'élément d'attache (10) est fait de plastique.

6. Cuisinière selon l'une quelconque des revendications précédentes,
**caractérisée en ce que**
la cuisinière comprend un élément chauffant (22) au moins partiellement enfermé par une bordure (24) avec une pluralité de trous de fixation (26), dans laquelle la vis pénètre ou peut pénétrer dans ledit trou de fixation (26) et/ou ledit trou de fixation (26) peut entrer en prise, ou être en prise, avec le mécanisme à encliquetage (14, 16, 18) de l'élément d'attache (10), et dans laquelle de préférence l'élément à crochet fixe (14) et/ou l'élément à crochet mobile (16) pénètrent dans le trou de fixation (26), lorsque ledit trou de fixation (26) est en prise avec le mécanisme à encliquetage (14, 16, 18) de l'élément d'attache (10).

7. Cuisinière selon l'une quelconque des revendications précédentes,
**caractérisée en ce que**
au moins un élément d'attache (10) du système d'attache inclut au moins un connecteur électrique (20) connectable ou connecté à un connecteur électrique complémentaire (30) de l'élément chauffant (22).

8. Cuisinière selon la revendication 7,
**caractérisée en ce que**
au moins un élément d'attache (10) du système d'attache inclut au moins une douille (20) connectable ou connecté à une fiche (30) de l'élément chauffant (22), et dans laquelle, de préférence, la fiche (30) de l'élément chauffant (22) est connectée à des enroulements de la bobine d'induction ou un fil chauffant par l'intermédiaire de câbles électriques (32) et/ou à un détecteur de l'élément chauffant (22) par l'intermédiaire de câbles de détecteur (34).

9. Cuisinière selon la revendication 6 ou selon la revendication 7 ou 8 lorsqu'elle fait référence à la revendication 6,
**caractérisée en ce que**
l'élément à crochet fixe (14) et/ou l'élément à crochet mobile (16) peuvent pénétrer dans le trou de fixation (26), lorsque ledit trou de fixation (26) est en prise avec le mécanisme à encliquetage (14, 16, 18) du système d'attache, dans laquelle de préférence les trous de fixation (26) sont agencés le long d'un chemin circulaire dans la bordure (24) de l'élément chauffant (22).

10. Cuisinière selon la revendication 6 ou 9 ou selon la revendication 7 ou 8 lorsqu'elle fait référence à la revendication 6,
**caractérisée en ce que**
au moins un, de préférence deux ou trois, des trous de fixation (26) est sous forme d'élément anti-erreur (36, 38), dans laquelle
de préférence ledit élément anti-erreur est un évidement (36) ouvert sur un bord extérieur de la bordure (24) et/ou ledit élément anti-erreur est une fente (38) ou une entrée de clef.

11. Cuisinière selon l'une quelconque des revendications 6, 9 ou 10 ou selon la revendication 7 ou 8 lorsqu'elle fait référence à la revendication 6,
**caractérisée en ce que**
l'élément chauffant (22) inclut au moins un connecteur électrique (30) connectable ou connecté à un connecteur électrique complémentaire (20) du système d'attache, dans laquelle, de préférence, l'élément chauffant (22) inclut au moins une fiche (30) connectable ou connectée à au moins une douille (20) du système d'attache, et dans laquelle ladite fiche (30) de l'élément chauffant (22) est connectée à des enroulements de la bobine d'induction ou un fil chauffant par l'intermédiaire de câbles électriques (32) et/ou à un détecteur de l'élément chauffant (22) par l'intermédiaire de câbles de détecteur (34).
